# EUROPÄISCHE PATENTANMELDUNG

(11) **EP 4 538 030 A1**
(43) Veröffentlichungstag der Anmeldung: **16.04.2025**
(21) Anmeldenummer: 23203299.5
(22) Anmeldetag: 12.10.2023
(51) Int. Cl.: B30B 15/02, B30B 11/00, B23K 26/36

(54) **FORMWERKZEUG**

(71) Anmelder: Rychiger AG, 3613 Steffisburg (CH)
(72) Erfinder: Dellsperger, René, 3613 Steffisburg (CH); Portner, Michael, 3653 Oberhofen a.T. (CH); Spring, Andreas, 3627 Heimberg (CH)
(74) Vertreter: Keller Schneider Patent- und Markenanwälte AG

(57) **Zusammenfassung**

Ein Formwerkzeug (1) zur Verwendung in Pressvorgängen zur Verpressung von Pulvermaterial, insbesondere Kaffeepulver, umfasst eine konkave, insbesondere kalottenförmige, Pressfläche (2). Auf der Pressfläche (2) befindet sich eine flächige Antihafttextur (3) zur Verhinderung eines Anhaftens von Pulvermaterial, insbesondere Kaffeepulver. Die Antihafttextur (3) umfasst eine Vielzahl von lokalen Vertiefungsstrukturen (5), wobei die Vertiefungsstrukturen (5) jeweils eine Tiefe von 0.04 mm bis 0.2 mm, insbesondere eine Tiefe von 0.08 mm bis 0.14 mm, aufweisen. Die Antihafttextur (3) vermeidet ein Anhaften von Pulvermaterial während und nach einem Pressvorgang, auch bei ölhaltigen Pulvermaterialien, z. B. Kaffeepulver. Sie verhindert ein solches Anhaften dabei auch für verschiedene Kaffeesorten und in Pressvorgängen, bei denen hohe Drücke entstehen.

## Beschreibung

### Technisches Gebiet

Die Erfindung betrifft ein Formwerkzeug zur Verwendung in Pressvorgängen zur Verpressung von Pulvermaterial, insbesondere I<affeepulver, umfassend eine konkave, insbesondere kalottenförmige, Pressfläche.

### Stand der Technik

Formwerkzeuge, z. B. Pressstössel, können verwendet werden, um Pulvermaterialen, insbesondere I<affeepulver, zu verpressen. Hierbei üben ein oder mehrere Formwerkzeuge über flächige Pressflächen eine starke Presskraft auf das Pulvermaterial aus. Solche Formwerkzeuge kommen insbesondere bei Anwendungen zum Einsatz, bei denen das Pulvermaterial zu einem festen Formkörper verpresst wird. Anwendungsbeispiele dieser Art von Formwerkzeug sind das Herstellen von pharmazeutischen Tabletten, Waschmaschinentabs, Tierfutter oder auch I<affeekapseln, welche zumindest teilweise aus verpresstem Kaffee bestehen. Dabei wird insbesondere eine festgelegte Menge an Pulvermaterial bereitgestellt, welches dann von einem oder mehreren Formwerkzeugen so unter Druck gesetzt wird, dass sich ein fester Formkörper bildet. Diese Art von Formwerkzeugen und ihr Einsatz ist bekannt.

Nachteil der bekannten Lösungen ist es, dass, insbesondere bei ölhaltigen Pulvermaterialien wie beispielsweise I<affeepulver, Reste des Pulvermaterials an der Pressfläche des Formwerkzeugs während und nach dem Pressvorgang anhaften können. Damit ist gemeint, dass Pulvermaterial an der Pressfläche verweilt, nachdem die Pressfläche keine Druckkraft mehr auf das Pulvermaterial ausübt. Das anhaftende Pulvermaterial wird dann nicht, wie eigentlich gewollt, Teil des Formkörpers und verbleibt nach dessen Entfernung an der Pressfläche. Hierdurch können das Volumen und das Gewicht des erzeugten Formkörpers von den erwarteten Werten abweichen. Zusätzlich kann das anhaftende Pulvermaterial einen weiteren darauffolgenden Pressvorgang ebenfalls beeinflussen und damit weitere ungewollte Abweichungen bei den erzeugten Formkörpern hervorrufen. Das Pulvermaterial kann sich zudem akkumulieren, wodurch die Probleme weiter verschärft werden.

### Darstellung der Erfindung

Aufgabe der Erfindung ist es, ein dem eingangs genannten technischen Gebiet zugehörendes Formwerkzeug zu schaffen, welches ein Anhaften von Pulvermaterial während und nach einem Pressvorgang effektiv verhindert.

Die Lösung der Aufgabe ist durch die Merkmale des Anspruchs 1 definiert. Gemäss der Erfindung befindet sich auf der Pressfläche eine flächige Antihafttextur zur Verhinderung eines Anhaftens des Pulvermaterials, wobei die Antihafttextur eine Vielzahl von lokalen Vertiefungsstrukturen umfasst und wobei die Vertiefungsstrukturen jeweils eine Tiefe von 0.04 mm bis 0.2 mm, insbesondere eine Tiefe von 0.08 mm bis 0.14 mm, aufweisen.

Mit einem Pulvermaterial sind alle Materialien gemeint, die im Wesentlichen als lose Körner, also als Pulver, vorliegen. Insbesondere sind damit Materialien gemeint, die zu einem Grossteil, insbesondere mehr als 80%, aus Körnern bestehen, deren maximaler Durchmesser weniger als 5 mm, insbesondere weniger als 3 mm, beträgt. Insbesondere ist mit einem Pulvermaterial I<affeepulver aus gemahlenen Kaffeebohnen gemeint. Ein Formwerkzeug ist ein Bauteil, welches in Pressvorgängen verwendet werden kann. Dazu umfasst es eine Pressfläche (s. u.). Bei Formwerkzeugen, die, z. B. mittels einer Hydraulik, bewegt werden, insbesondere Stössel, kann das Formwerkzeug einen, insbesondere zylinderförmigen, Schaft hinter der Pressfläche umfassen. Die Pressfläche und der Schaft können aus einem einzigen Körper oder mehreren verbundenen Körpern bestehen. Stationäre Formwerkzeuge, die z. B. lediglich der Kraft eines weiteren Stössels widerstehen, können insbesondere auch eine Halterung anstelle des Schafts, oder zusätzlich zum Schaft, aufweisen, mit der sie entsprechend befestigt und fixiert werden können.

Eine Pressfläche ist eine zusammenhängende Oberfläche des Formwerkzeugs, deren Grösse und Form sich im Wesentlichen (mit möglichen Abweichungen) nach einem Teil der Oberfläche eines jeweiligen herzustellenden Formkörpers richtet. Die erfinderische Pressfläche ist konkav in Bezug auf das Formwerkzeug. Insbesondere ist die Pressfläche kalottenförmig. Mit kalottenförmig ist gemeint, dass die Pressfläche einen kreisförmigen äusseren Rand, insbesondere mit einem Durchmesser von 10 mm bis 40 mm, hat und sich innerhalb des Rands eine konkav gewölbte Fläche befindet, die symmetrisch zur Oberflächennormalen des Flächenmittelpunkts ist. Die Fläche hat also eine Form, die der Form eines I<ugelsegments annähernd entspricht und sie ist gekrümmt. Abweichend von einem I<ugelsegment kann die kalottenförmige Pressfläche in ihrer Wölbung beispielsweise mehrere voneinander abweichende Krümmungsradien aufweisen. Insbesondere weist die Pressfläche Krümmungsradien von 10 mm bis 15 mm auf. Durch diese verschiedenen Krümmungen kann die Pressfläche beispielsweise einer späteren Ausdehnung eines Presskörpers nach dem Pressvorgang Rechnung tragen bzw. diese ausgleichen.

Die Pressfläche ist mindestens undurchlässig für das jeweilige Pulvermaterial. Die Textur der Pressfläche ist insbesondere (abgesehen von der Antihafttextur) glatt. Damit ist gemeint, dass sie auf der Grössenordnung der Körner des Pulvermaterials oder der Feinstrukturierung der Antihafttextur keine Strukturen aufweist, sondern stetig und eben ist. Mögliche grössere Strukturen können beispielsweise noch Erhebungen oder Vertiefungen in Form von Schriftzügen oder Designs sein, die damit in einen Formkörper hineingepresst werden können.

Zur Definition der Geometrie der Antihafttextur werden die folgenden Bezeichnungen verwendet: Eine Tiefe oder eine Höhe bezeichnen eine relative Distanz bzw. Position entlang einer Oberflächennormalen der Pressfläche am jeweiligen Ort der Pressfläche. Dabei bezeichnet eine wachsende Tiefe eine Position oder Distanz, welche entlang der Normalen zum Formwerkzeug hinführend anwächst, während eine wachsende Höhe eine Distanz oder Position bezeichnet, welche vom Formwerkzeug wegführend anwächst.

Eine lokale Vertiefungsstruktur weist eine Vertiefung auf, d.h. ausgehend von mindestens einem Punkt, dem tiefsten Punkt innerhalb der Vertiefung bzw. den tiefsten Punkten innerhalb der Vertiefung, wächst die Höhe der Pressfläche innerhalb des lokalen Bereichs der Vertiefungsstruktur in alle Richtungen hin an. Die Tiefe der Vertiefungsstruktur entspricht dabei der mittleren Höhendistanz, bis zu welcher die Höhe der Oberfläche der Pressfläche vom tiefsten Punkt der Vertiefung aus stetig anwächst.

Der Abstand zwischen zwei Vertiefungsstrukturen ist insbesondere der kürzeste Pfad (und dessen Länge) entlang der Pressfläche, der von einem Punkt auf der Pressfläche innerhalb der ersten Vertiefungsstruktur und auf der halben Tiefe der ersten Vertiefungsstruktur zu einem Punkt auf der Pressfläche innerhalb der zweiten Vertiefungsstruktur und auf der halben Tiefe der zweiten Vertiefungsstruktur führt. Sollte es mehrere solcher kürzesten Pfade geben, stellen alle diese Pfade einen Abstand zwischen den zwei Vertiefungsstrukturen dar.

Bei der erfinderischen Antihafttextur handelt es sich um eine flächige Textur der Pressfläche. Die Antihafttextur ist ein Bereich der Pressfläche mit einer Strukturierung der Oberfläche der Pressfläche, wobei dieser Bereich eine Vielzahl von lokalen Vertiefungsstrukturen umfasst, wobei die Vertiefungsstrukturen jeweils eine Tiefe von 0.04 mm bis 0.2 mm, insbesondere eine Tiefe von 0.08 mm bis 0.14 mm, aufweisen.

Dabei bezeichnet eine Vielzahl von Vertiefungsstrukturen eine Menge von mehr als drei Vertiefungsstrukturen, insbesondere mehr als 1000, bevorzugt mehr als 5000 Vertiefungsstrukturen. Insbesondere handelt es sich um weniger als 1 000 000 000, bevorzugt weniger als 1 000 000, Vertiefungsstrukturen.

Die Fläche der Antihaftstruktur bezeichnet insbesondere die grösste Fläche auf der Pressfläche, die durch untereinander verbundene Grenzen, die jeweils innerhalb einer Vertiefungsstruktur (unterhalb ihrer halben Tiefe) verlaufen, oder die in ihrem Verlauf jeweils einem Abstand zwischen zwei Vertiefungsstrukturen der Vielzahl (gemäss obiger Definition) entsprechen, eingegrenzt werden kann.

Es hat sich durch Versuche überraschend herausgestellt, dass die erfinderische Antihafttextur in der Lage ist, ein Anhaften von Pulvermaterial an der Pressfläche des Formwerkzeugs, insbesondere im hinteren Bereich des Formwerkzeugs (nahe des Pressflächenmittelpunkts), auch bei vergleichsweise hohen Anpresskräften (insbesondere bei Anpresskräften von 4500 N bis 7500 N) besonders effektiv zu verhindern. Dies ist insofern überraschend, als dass in der Regel eine möglichst glatte und strukturlose Oberfläche angestrebt wird, um einem Anhaften von Material entgegen zu wirken. Insbesondere verhindert die Antihafttextur das Anhaften von I<affeepulver, welches auf Grund der darin enthaltenen öligen Substanzen besonders zum Anhaften bei Pressvorgängen neigt. Weiter verhindert die erfinderische Antihafttextur auch effektiv das Anhaften von I<affeepulvern verschiedener Sorten, z. B. verschiedener Mahlgrade, Bohnenarten oder Röstungsgrade, womit das erfinderische Formwerkzeug besonders universell einsetzbar ist. Mögliche Gründe für die Wirkung der erfinderischen Antihafttextur sind ein Ausbilden von Lufteinlagerungen in den Vertiefungen, wodurch der Kontakt zum Pulvermaterial reduziert wird, oder ein Reduzieren der I<ontaktfläche durch Strukturierungen der Pressfläche auf einer vergleichbaren oder geringeren Grössenordnung als das Pulvermaterial.

In einer bevorzugten Ausführungsform der Erfindung sind die lokalen Vertiefungsstrukturen lasergraviert. Damit ist gemeint, dass die Vertiefungsstrukturen aus einem Verfahren zur Lasergravur hervorgegangen sind. Bei einem solchen Verfahren wird auf einer zu gravierenden Oberfläche, z. B. eines Formwerkzeugrohlings, durch Laserbestrahlung lokal eine Veränderung der Oberflächentextur erzeugt, insbesondere durch Laserablation. Durch das Einbringen von Wärme in einen lokal sehr begrenzten Bereich des Materials unter der zu gravierenden Oberfläche, wird das Material erhitzt und verdampft anschliessend, oder wandelt sich sogar zu einem Plasma. Ebenfalls kann es zu Resublimierung und Kondensation von Teilen des verdampften Materials auf der zu gravierenden Oberfläche kommen. Die Laserablation erzeugt dabei für die Lasergravur charakteristische Vertiefungsstrukturen. Es hat sich durch Versuche herausgestellt, dass eine Antihafttextur mit lasergravierten Vertiefungsstrukturen besonders gut geeignet ist, ein Anhaften von Pulvermaterial zu verhindern und dabei einfach in der Erzeugung ist. Dabei können Formwerkzeuge mit lasergravierten Vertiefungsstrukturen zusätzlich besonders verschleissfest sein, da als Oberflächenmaterial der Pressfläche ausdauernde Materialien (siehe weiter unten) gewählt werden können.

Alternativ sind nicht lasergravierte Antihafttexturen denkbar, die beispielsweise eingepresst sind oder durch Dünnschichtverfahren erzeugt wurden (z. B. mittels Verfahren zur physikalischen Gasphasenabscheidung).

Bevorzugter Weise sind die lasergravierten Vertiefungsstrukturen mit einem Lasereinfallswinkel von höchstens 40°, insbesondere höchstens 20°, lasergraviert.

Der Lasereinfallswinkel bezeichnet dabei den Lichteinfallswinkel des Lasers auf die zu gravierende Oberfläche bei der Lasergravur, insbesondere den Winkel des Lasers zum Lot der zu gravierenden Oberfläche. Ein zu hoher Lasereinfallswinkel und damit ein, bezogen auf die zu gravierende Oberfläche, schräger Lasereinfall, erzeugt Vertiefungen, die in ihrer Tiefe in Bezug auf die Pressfläche schräg liegen und ein asymmetrisches Flächenprofil haben. Eine Vertiefungsstruktur, die mit einem Lasereinfallswinkel von höchstens 40°, insbesondere höchstens 20°, lasergraviert ist, hat wiederum eine charakteristische Struktur. Sie ist besonders rotationssymmetrisch, bezogen auf eine lokale Flächennormale der Pressfläche. Ausserdem vertieft sie sich entlang der lokalen Flächennormale der Pressfläche. Diese Art Vertiefungsstrukturen haben sich in Versuchen als besonders geeignet zur Verhinderung des Anhaftens von Pulvermaterial gezeigt.

Alternativ können die Vertiefungsstrukturen nicht lasergraviert sein, oder mit einem anderen Lasereinfallswinkel lasergraviert sein.

In einer bevorzugten Ausführungsform des Formwerkzeugs sind die Vertiefungsstrukturen jeweils durch mehrere Einzelabtragungen lasergraviert, wobei eine Einzelabtragung jeweils eine lokale Vertiefung mit einer Tiefe von 0.0002 mm bis 0.0006 mm erzeugt.

Eine Einzelabtragung erzeugt dabei durch einen einzelnen Laserimpuls eine lokale Vertiefung auf der zu gravierenden Oberfläche. Eine erfindungsgemässe Vertiefungsstruktur entsteht dann durch eine Überlagerung solcher Einzelabtragungen. Dies wird in der Regel dadurch bewerkstelligt, dass ein Gravurlaser mehrere Laserpulse in zeitlichen Abständen auf dieselbe Stelle auf der zu gravierenden Oberfläche abgibt. Beispielsweise kann der Gravurlaser die Fläche der entstehenden Antihafttextur mehrere Male abfahren, wobei jeweils pro entstehende Vertiefungsstruktur nur eine Einzelabtragung stattfindet. Die Tiefe der lokalen Vertiefung, die aus einer Einzelabtragung hervorgeht, ist, wie bereits oben genannt, die mittlere Höhendistanz, bis zu welcher die Höhe der Oberfläche der Pressfläche vom tiefsten Punkt der Vertiefung aus stetig anwächst.

Dadurch, dass eine Vertiefungsstruktur aus mehreren Einzelabtragungen hervorgeht, bei denen jeweils eine Materialverdampfung und auch eine Materialablagerung aus dem Dampf (durch Kondensation und/oder Resublimation) stattfindet, hat sie ein charakteristisches Vertiefungsprofil. Beispielsweise kann die lasergravierte Vertiefungsstruktur eine festgelegte Tiefe relativ unabhängig von ihrer flächigen Ausdehnung annehmen, da die Einzelabtragungen in ihrer Intensität limitiert sind.

Versuche haben gezeigt, dass Vertiefungsstrukturen, die durch mehrere Einzelabtragungen mit einer jeweiligen Tiefe von 0.0002 mm bis 0.0006 mm lasergraviert sind, besonders zur Verhinderung des Anhaftens von Pulvermaterial geeignet sind. Ausserdem sind erfinderische Vertiefungsstrukturen, welche auf diese Art lasergraviert sind, auf eine marktübliche Weise - und damit einfach - erzeugbar.

Alternativ können die Vertiefungsstrukturen auch nicht lasergraviert sein, oder mit Einzelabtragungen, die eine andere Tiefe erzeugen, lasergraviert sein. Die Vertiefungsstrukturen können z. B. auch mit einer einzigen Gesamtabtragung, die bei nur einem Laserpuls die Tiefe der Vertiefungsstruktur erzeugt, lasergraviert sein.

In einer bevorzugten Variante der oben genannten Ausführung der Erfindung sind die Vertiefungsstrukturen jeweils durch wenigstens 10 und höchstens 50 Einzelabtragungen, insbesondere wenigstens 20 und höchstens 40 Einzelabtragungen, lasergraviert. Eine mögliche Art der Lasergravur ist die Durchführung der Einzelabtragungen in Schichten. Bei einer Schicht wird dann für einen Teilbereich oder den Gesamtbereich der zu gravierenden Oberfläche pro Schicht jeweils eine Einzelabtragung an jeder Stelle ausgeführt, an der sich eine Vertiefungsstruktur befinden soll. Die Lasergravur der Oberfläche erfolgt dann in mehreren solcher Schichten.

Es hat sich gezeigt, dass Vertiefungsstrukturen, die auf diese Art lasergraviert sind, eine Antihafttextur bilden, die effektiv das Anhaften von Pulvermaterial verhindert. Damit ist das erfinderische Formwerkzeug verlässlich und reproduzierbar mit herkömmlichen Methoden herstellbar.

Alternativ können die Vertiefungsstrukturen auch jeweils durch weniger oder mehr Einzelabtragungen lasergraviert sein. Dies könnte allerdings negative Auswirkungen auf die Ausformung der Vertiefungsstrukturen haben, z. B. könnten diese vergleichsweise breit sein (bezogen auf die Pressfläche) oder eine weniger homogene Form aufweisen und damit insgesamt das Anhaften von Pulvermaterial weniger effizient verhindern. Als weitere Alternative kann eine Antihafttextur auch ohne lasergravierte Vertiefungen erzeugt werden.

In einer bevorzugten Ausführungsform der Erfindung sind die Vertiefungsstrukturen durch einen Laser mit einem Fokusdurchmesser von 0.005 mm bis 0.2 mm, insbesondere 0.02 mm bis 0.1 mm, lasergraviert.

Dies bedeutet, dass bei der Lasergravur das Laserlicht bzw. der Laserstrahl mit einem Fokusdurchmesser von 0.005 mm bis 0.2 mm, insbesondere 0.02 mm bis 0.1 mm, auf die gravierende Oberfläche aufstrahlt. Dabei hat die fokussierende Linse üblicherweise einen Oberflächenabstand, der das Laserlicht auf die zu gravierende Oberfläche fokussiert. Der Fokusdurchmesser ist wiederum üblicherweise der Durchmesser eines Kreises mit 86,5% Leistungsinhalt des Laserlichts im Fokus, oder bei einem näherungsweise gaussförmigen Strahlprofil das Doppelte des Strahlradius in der Strahltaille.

Der Fokusdurchmesser beeinflusst dabei stark die Form der erzeugten lokalen Vertiefungen, insbesondere auch deren horizontale Ausdehnung. Die Vertiefungsstrukturen, die mit einem solchen Fokusdurchmesser lasergraviert sind, haben in Versuchen besonders gute Eigenschaften zur effektiven Verhinderung des Anhaftens von Pulvermaterial gezeigt. Ausserdem sind diese Laserparameter einfach zu erzeugen, wodurch das erfinderische Formwerkzeug einfach herzustellen ist.

In einer bevorzugten Ausführungsform der Erfindung sind die Vertiefungsstrukturen durch einen Laser mit einer Fokustiefe von 0.05 mm bis 5 mm, insbesondere 0.2 mm bis 3 mm, lasergraviert. Mit der Fokustiefe ist hier insbesondere die doppelte Distanz gemeint, ab der der Laserstrahl, ausgehend vom Fokus, seinen Durchmesser (analog zur obigen Definition) um den Faktor √2 vergrössert. Insbesondere entspricht die Fokustiefe der doppelten Rayleighlänge. Vertiefungsstrukturen, die mit einer solchen (vergleichsweise grossen) Fokustiefe lasergraviert sind, haben ein charakteristisches Verhältnis von Tiefe und flächiger Ausdehnung und damit eine Form, die besonders gut zur Verhinderung des Anhaftens von Pulvermaterial geeignet ist. Ein weiterer Vorteil der entsprechend lasergravierten Vertiefungsstrukturen ist es, dass geringe Höhenunterschiede auf der zu gravierenden Oberfläche weniger Einfluss auf die Vertiefungsstrukturen haben. Der Grund dafür ist die geringe Änderung des Fokusdurchmessers innerhalb der Fokuslänge. Daher spricht man auch von Toleranz der Fokustiefe.

In einer bevorzugten Ausführung aller oben genannten Varianten mit lasergravierten Vertiefungsstrukturen, sind die Vertiefungsstrukturen durch einen Ytterbium-Faserlaser lasergraviert. Ein Ytterbium-Faserlaser umfasst dabei als aktives Medium eine Glasfaser, die mit Ytterbium dotiert ist. Die für Glasfaserlaser typische Strahlqualität (z. B. M² < 1,2, wobei M² die Beugungsmasszahl angibt) erzeugt dabei charakteristische Vertiefungsstrukturen. Insbesondere führt eine solche Strahlqualität zu lokalen Vertiefungen, deren horizontale Ausdehnung eher dem Fokusdurchmesser des Lasers entspricht. Dies liegt an der vergleichsweise geringen Laserdivergenz (z. B. im Vergleich zu einem Nd:YAG-Laser) im Bereich des Fokus. Damit haben Vertiefungsstrukturen, die mit einem Ytterbium-Faserlaser lasergraviert sind, im Verhältnis zu ihrer Tiefe eine vergleichsweise geringe horizontale Ausdehnung, verglichen mit Lasergravuren anderer Laser. Ausserdem erzeugt ein verlässlicher Laser wie der Ytterbium-Faserlaser eine besonders gleichmässige Struktur der Vertiefungsstrukturen, da seine Strahleigenschaften sich über den Verlauf einer Gravur vergleichsweise wenig ändern.

Alternativ können die Vertiefungsstrukturen mit einem anderen Laser lasergraviert sein, oder nicht lasergraviert sein.

Bei einer bevorzugten Ausführungsform der Erfindung gemäss allen bereits genannten Alternativen umfasst die Antihafttextur lokale Erhöhungsstrukturen, wobei die Erhöhungsstrukturen an die lokalen Vertiefungsstrukturen angrenzen, und wobei die Erhöhungsstrukturen eine Höhe von 0.01 mm bis 0.14 mm aufweisen.

Bei den lokalen Erhöhungsstrukturen handelt es sich um lokale Bereiche der Pressfläche innerhalb der Antihafttextur. Eine Erhöhungsstruktur enthält dabei eine Erhöhung. Eine Erhöhung auf der Pressfläche kann z. B. dadurch identifiziert werden, dass sich auf der Pressfläche eine geschlossene I<urve von Punkten gleicher Höhe finden lässt, eine Isohypse, die mindestens einen Punkt lokal maximaler Höhe, den jeweiligen Gipfelpunkt, auf der Pressfläche einschliesst. Die Höhe der Erhöhung ist dabei z. B. der Höhenunterschied zwischen dem bzw. einem Gipfelpunkt und der tiefsten, ihn einschliessenden Isohypse (analog zu einer Schartenhöhe). Die kleinste von einer solchen tiefsten Isohypsen eingeschlossene Fläche ist dann ausserdem der lokale Bereich der Erhöhung. Die Erhöhungen sind also nicht bloss flache Bereiche der Pressfläche zwischen den Vertiefungen, sondern zusätzliche Strukturen.

Der lokale Bereich der Erhöhungsstrukturen hat insbesondere eine flächige Ausdehnung, die weniger als dem Zehnfachen der flächigen Ausdehnung der Vertiefungsstrukturen entspricht. Insbesondere bildet jeweils eine lokale Erhöhungsstruktur einen umlaufenden erhöhten Wall um jeweils eine Vertiefungsstruktur der Antihafttextur. Insbesondere sind die Erhöhungsstrukturen dadurch gebildet, dass sich bei lasergravierten Vertiefungsstrukturen ein Teil des durch die Lasergravur verdampften Materials der Pressfläche wieder neben den Vertiefungen auf der Pressfläche abgesetzt hat.

Mit «angrenzen» ist gemeint, dass der lokale Bereich einer Erhöhungsstruktur sich in der Nähe einer Vertiefungsstruktur befindet, insbesondere, dass mindestens eine Vertiefungsstruktur einen Abstand zu dem lokalen Bereich der Erhöhungsstruktur aufweist, der geringer ist als der maximale Abstand zweier Punkte innerhalb des lokalen Bereichs der Erhöhungsstruktur. Besonders bevorzugt enthält der lokale Bereich der Erhöhungsstruktur eine Vertiefungsstruktur (da die Erhöhungsstruktur die Vertiefungsstruktur umgibt).

Die Erhöhungsstrukturen tragen zur Antihaft-Wirkung der Antihafttextur bei. Durch die zusätzliche Strukturierung der Pressfläche wird ein Anhaften von Pulvermaterial noch effektiver verhindert.

Alternativ kann die Antihafttextur auch keine solche Erhöhungsstrukturen aufweisen, insbesondere wenn die Antihafttextur Vertiefungsstrukturen aufweist, die nicht lasergraviert sind.

Bevorzugterweise weisen die lokalen Vertiefungsstrukturen jeweils auf ihrer halben Tiefe eine maximale flächige Ausdehnung von 0.00002 mm² bis 0.03 mm², insbesondere 0.0003 mm² bis 0.008 mm², auf. Die halbe Tiefe bezeichnet dabei eine Höhe, die sich auf der Hälfte der Tiefe der Vertiefungsstruktur, z. B. nach der eingangs gegebenen Definition, befindet. Die maximale flächige Ausdehnung ist die Fläche, die von der lokalen Vertiefung der Vertiefungsstruktur auf der Pressfläche auf der entsprechenden Höhe eingegrenzt wird. Versuche haben gezeigt, dass Vertiefungsstrukturen, die eine solche maximale flächige Ausdehnung auf ihrer halben Tiefe aufweisen, besonders gut geeignet sind, ein Anhaften von Pulvermaterial zu verhindern, insbesondere wenn es sich bei dem Pulvermaterial um I<affeepulver handelt. Ausserdem sind sie mit bekannten Verfahren zur Lasergravur einfach erzeugbar.

Alternativ können die Vertiefungsstrukturen auch andere flächige Ausdehnungen aufweisen, z. B. eine grössere flächige Ausdehnung. Dies könnte allerdings zu einer weniger effizienten Verhinderung des Anhaftens von Pulvermaterial führen.

Bevorzugter Weise befinden sich die lokalen Vertiefungen innerhalb von einer Vielzahl an Makrobereichen mit jeweils einer flächigen Ausdehnung von 0.3 mm² bis 3.0 mm² auf der Pressfläche, wobei die Makrobereiche jeweils durch Grenzbereiche mit geringerer Tiefe als die Tiefe der lokalen Vertiefungsstrukturen voneinander getrennt sind. Ein Makrobereich bezeichnet dabei einen zusammenhängenden Bereich der Pressfläche, innerhalb dessen sich die Vertiefungsstrukturen gruppiert befinden. Eine Vielzahl von Makrobereichen bezeichnet hier eine Anzahl von Makrobereichen, die mindestens 3 beträgt, insbesondere mindestens 50, vorzugsweise mindestens 100. Ein Makrobereich grenzt sich von anderen Makrobereichen durch Grenzbereiche ab, die sich zwischen den Makrobereichen befinden. Ein Grenzbereich ist dabei ein zusammenhängender Bereich der Pressfläche, innerhalb dessen sich keine erfinderischen Vertiefungsstrukturen befinden und dessen Oberfläche höchstens lokale Vertiefungen mit einer geringeren Tiefe als die erfindungsgemässen Vertiefungsstrukturen aufweist. Die Pressfläche ist innerhalb der Grenzbereiche insbesondere glatt und stetig. Insbesondere kann die Pressfläche auch lokale Vertiefungen aufweisen, die eine geringere Tiefe als die Vertiefungsstrukturen der Antihafttextur (insbesondere weniger als 50% der mittleren Tiefe der Vertiefungsstrukturen) haben.

Dabei haben die Grenzbereiche bevorzugt eine Ausdehnung, die geringer ist als die der Makrobereiche, allerdings grösser als die Bereiche der lokalen Vertiefungen der Vertiefungsstrukturen und auch grösser (insbesondere mindestens um einen Faktor 5) als die mittleren Abstände der Vertiefungsstrukturen innerhalb der Makrobereiche.

Der Abstand zwischen zwei Vertiefungsstrukturen ist gemäss der obigen Definition insbesondere der kürzeste Pfad (und dessen Länge) entlang der Pressfläche, der von einem Punkt auf der Pressfläche innerhalb einer ersten Vertiefungsstruktur und auf der halben Tiefe der ersten Vertiefungsstruktur zu einem Punkt auf der Pressfläche innerhalb einer zweiten Vertiefungsstruktur und auf der halben Tiefe der zweiten Vertiefungsstruktur führt. Sollte es mehrere solcher kürzesten Pfade geben, stellen alle diese Pfade einen Abstand zwischen den zwei Vertiefungsstrukturen dar.

Die Zuordnung von Vertiefungsstrukturen zu einem Makrobereich lässt sich dabei insbesondere folgendermassen ausführen: Wenn in der Vielzahl der Vertiefungsstrukturen eine Teilmenge (insbesondere mehr als drei, bevorzugt mehr als 10, besonders bevorzugt mehr als 50) von Vertiefungsstrukturen auf der Pressfläche existiert, bei denen der mittlere Abstand einer Vertiefungsstruktur zum nächsten Nachbarn innerhalb der Teilmenge um einen bestimmten Faktor (z. B. 5) geringer ist, als der geringste Abstand einer Vertiefungsstruktur der Teilmenge zur nächsten Vertiefungsstruktur ausserhalb der Teilmenge, so kann diese Teilmenge als in einem Makrobereich angeordnet angesehen werden.

Die Fläche und Form eines Makrobereichs entspricht dann insbesondere der grössten Fläche und (makroskopischen) Form auf der Pressfläche, die durch verbundene Grenzen, die jeweils innerhalb einer Vertiefungsstruktur (unterhalb ihrer halben Tiefe) verlaufen, oder die in ihrem Verlauf jeweils einem Abstand zwischen zwei Vertiefungsstrukturen innerhalb des Makrobereichs entsprechen, eingegrenzt werden kann.

Bevorzugter Weise befindet sich eine im Wesentlichen gleiche Anzahl von Vertiefungsstrukturen innerhalb jeden Makrobereichs. Alternativ kann diese Anzahl aber auch variieren.

Versuche haben ergeben, dass eine Antihafttextur, bei der sich die Vertiefungsstrukturen innerhalb einer Vielzahl an entsprechenden Makrobereichen befinden, effektiv das Anhaften von Pulvermaterial verhindert. Dabei ist eine solche Oberfläche besonders einfach herzustellen, insbesondere besonders einfach als Lasergravur ausführbar. Die voneinander getrennten Makrobereiche können (auch in Gruppen von Makrobereichen) in einzelnen Bearbeitungsschritten der Lasergravur, z. B. mit jeweils einem entsprechenden Lasereinfallswinkel pro Bearbeitungsschritt, erzeugt werden. Hierdurch kann die erfinderische Antihafttextur besonders einfach erzeugt werden. Ausserdem erlaubt es die Anordnung der Vertiefungsstrukturen in Makrobereichen, mit einer vergleichsweise geringen Anzahl an Vertiefungsstrukturen einen grossen Bereich der Pressfläche abzudecken. Damit ist die erfinderische Antihafttextur besonders robust und ebenfalls besonders einfach erzeugbar.

Alternativ können die Vertiefungsstrukturen auch in grösseren Makrobereichen angeordnet sein oder z. B. lediglich einen zusammenhängenden Bereich bedecken, also ohne eine weitere Strukturierung.

In einer bevorzugten Ausführungsform der Erfindung haben die Makrobereiche der Antihafttextur eine Sechseck-Form und sind in der Anordnung eines Sechseck-Wabenmusters zueinander auf der Pressfläche angeordnet. Damit ist gemeint, dass die Makrobereiche jeweils lokal im Wesentlichen die Form eines Sechsecks, insbesondere eines regulären Sechsecks (ohne Beachtung der Krümmung der Pressfläche oder des Randbereichs der Antihafttextur) haben und dass sie zueinander in Form eines Wabenmusters angeordnet sind. Diese Geometrie hat den Vorteil, dass die Makrobereiche eine einfache Form, insbesondere ohne scharfe Winkel, haben. Insbesondere reguläre Sechsecke bieten noch eine Symmetrie gegenüber Drehungen von Vielfachen von 60°. Sie erscheinen aus verschiedenen Winkeln also gleichförmig und sind somit, insbesondere bei einer Vielzahl solcher Formen, in einer Lasergravur besonders leicht zu erzeugen. Der Grund ist, dass der Laser auch bei verschiedenen Blickwinkeln pro Makrostruktur nur einen geringen gleichbleibenden Bewegungsspielraum benötigt. Ein Vorteil des Wabenmusters, auch Bienenwabenmuser oder Sechseck-Parkettierung, ist die ideale Parkettierung. Dabei liegen sich benachbarte Makrobereiche immer über vollständige Kanten gegenüber. Eins solches Muster ist besonders einfach und kostengünstig zu erzeugen. Versuche haben ausserdem gezeigt, dass ein solches Muster von Vertiefungsstrukturen gut geeignet ist, um ein Anhaften von Pulvermaterial zu verhindern.

Alternativ können die Makrobereiche eine Vielzahl an anderen Formen annehmen, z. B. eine Dreieck-Form, eine Viereck-, insbesondere eine Quadratform, eine Fünf-, Sieben- , Acht- oder Mehreck-Form. Ebenso sind komplexere Formen denkbar, die z. B. einer Silhouette oder einem Design entsprechen.

In einer besonders bevorzugten Alternative der Erfindung wird durch die Makrobereiche ein Erscheinungsbild einer Materialoberfläche wie Holz, Leder, Stein oder ein Gewebe, insbesondere ein Stoffgewebe, nachgestellt bzw. imitiert. Diese Strukturierungen der Pressfläche sind ebenfalls als Lasergravur ausführbar. Auch diese Alternativen haben in Versuchen gezeigt, dass sie effektiv ein Anhaften von Pulvermaterial verhindern. Ausserdem können auch solche Strukturierungen einfach als Lasergravur ausgeführt werden und sind oft bereits in einem etablierten kommerziellen Verfahren zur Lasergravur herstellbar.

In einer bevorzugten Alternative der Erfindung ist die Pressfläche rotationssymmetrisch zu einer Symmetrieachse und die Antihaftstruktur bedeckt mindestens einen Bereich der Pressfläche, der zu der Symmetrieachse der Pressfläche einen Normalenwinkel von weniger als 20° einnimmt.

Mit rotationssymmetrisch zu einer Symmetrieachse ist in diesem Fall gemeint, dass eine Symmetrieachse existiert, wobei die Pressfläche (abgesehen von der Antihafttextur) durch Rotation um die Symmetrieachse im Wesentlichen auf sich selbst abgebildet werden kann (mindestens 70 96 Übereinstimmung). Dabei sind auch diskrete Rotationsymmetrien, also um feste Winkel, wie z. B. 60° mitgemeint. Ein Beispiel einer solchen Pressfläche ist eine I<ugelkalotte, bei der die die Höhe bestimmende Linie die Symmetrieachse bildet.

Mit bedecken ist hierbei gemeint, dass die Fläche der Antihaftstruktur (gemäss der eingangs gegebenen Definition) mindestens den Bereich der Pressfläche mit einem Normalenwinkel von weniger als 20° zur Symmetrieachse enthält.

Der Normalenwinkel ist dabei der kleinste Winkel, der zwischen der lokalen Flächennormalen der Pressfläche und der Symmetrieachse eingenommen werden kann.

Der Bereich der Pressfläche mit einen Normalenwinkel von weniger als 20° zur Symmetrieachse kann dabei verhältnismässig kleinere Bereiche mit einem anderen Normalenwinkel zur Symmetrieachse, oder sogar gar keinem Normalenwinkel (z. B. eine Flanke einer lokalen Erhebung auf der Pressfläche) miteinschliessen.

Typischerweise haben Formwerkzeuge zur Herstellung von rotationssymmetrischen Formkörpern eine ebenfalls rotationssymmetrische Form. Dabei erfolgt typischerweise eine Kraftausübung auf das Pulvermaterial entlang der Symmetrieachse. Bei konkaven Pressflächen, insbesondere bei kalottenförmigen Pressflächen, kann es zu besonders hohen Anpresskräften zwischen der Pressfläche und dem Pulvermaterial in dem Bereich der Pressfläche kommen, der nahe der Symmetrieachse ist. Dadurch, dass die Antihaftstruktur mindestens einen Bereich der Pressfläche bedeckt, der zu der Symmetrieachse der Pressfläche einen Normalenwinkel von weniger als 20° einnimmt, kann die Antihafttextur in dem Bereich ihre Wirkung entfalten, in dem die grössten Anpresskräfte herrschen. Insbesondere erlaubt eine solche Ausrichtung der Antihafttextur eine Begrenzung der Fläche der Antihafttextur, bei immer noch effektiver Verhinderung des Anhaftens von Pulvermaterial. Damit wird ein einfach herzustellendes erfinderisches Formwerkzeug geschaffen.

Alternativ kann die Pressfläche auch nicht rotationsymmetrisch sein, oder so geformt sein (z. B. konusförmig), dass ein Bereich der Pressfläche mit einen Normalenwinkel von weniger als 20° zur Symmetrieachse nicht existiert. Auch kann die Antihafttextur z. B. nur Teilbereiche des Bereichs der Pressfläche mit einen Normalenwinkel von weniger als 20° zur Symmetrieachse, abdecken.

In einer bevorzugten Ausführung der Erfindung befindet sich flächig ausserhalb der Antihafttextur auf der Pressfläche ein Bereich, dessen Oberfläche relativ zur Antihafttextur im Wesentlichen glatt ist.

Flächig ausserhalb der Antihafttextur bedeutet in diesem Fall ein im Wesentlichen zusammenhängender Bereich der Pressfläche, auf dem sich keine erfinderischen Vertiefungsstrukturen befinden und der nicht innerhalb der Fläche der Antihafttextur, insbesondere gemäss der eingangs gegebenen Definition, liegt. Relativ zur Antihafttextur glatt bedeutet, dass der Bereich keine Vertiefungen oder Erhöhungen aufweist, die in derselben Grössenordnung wie die Vertiefungsstrukturen und Erhöhungsstrukturen der Antihafttextur liegen, insbesondere auch keine tieferen oder höheren Vertiefungen oder Erhöhungen. Insbesondere kann dieser Bereich ein glattpolierter Bereich der Pressfläche sein. Ausserhalb bedeutet hierbei insbesondere, dass der Bereich nicht von der Antihafttextur eingeschlossen wird, sondern sich zwischen der Antihafttextur und dem äusseren Rand der Pressfläche befindet. Insbesondere umrahmt der glatte Bereich die Antihafttextur vollständig, die Fläche der Antihafttextur erstreckt sich also nicht bis zum Rand der Pressfläche.

Vorteil dieser Art von Formwerkzeug ist es, dass die Antihafttextur nicht in den Bereichen der Pressfläche erzeugt werden muss, die sich im Randbereich der Pressfläche befinden. Damit ist das erfinderische Formwerkzeug besonders einfach herstellbar. Versuche haben gezeigt, dass ein glatter Bereich ausserhalb der Antihafttextur toleriert werden kann und ein Anhaften von Pulvermaterial trotzdem effektiv verhindert wird. Weil der glatte Bereich nicht texturiert werden muss, vereinfacht sich die Herstellung des Formwerkzeugs.

In einer bevorzugten Ausführungsform der Erfindung ist die Pressfläche kalottenförmig und eine Fläche der Antihafttextur entspricht einem ersten inneren konzentrischen Bereich der Pressfläche, wobei ein äusserer glatter zweiter Bereich der Pressfläche um die Antihafttextur herum liegt und wobei der erste Bereich 1096 bis 60%, insbesondere 20% bis 50%, der Pressfläche ausmacht und der zweite Bereich den Rest der Pressfläche ausmacht.

Ein erster innerer konzentrischer Bereich bezeichnet hier einen Teilbereich der kalottenförmigen Pressfläche, der ebenfalls kalottenförmig ist, wobei die Symmetrieachse der kalottenförmigen Pressfläche den ersten Bereich schneidet und wobei der erste Bereich ebenfalls symmetrisch zur Symmetrieachse der Pressfläche ist. Mit einer Fläche der Antihafttextur ist insbesondere die Fläche der Antihafttextur gemäss der eingangs gegebenen Definition gemeint. Der zweite glatte Bereich liegt um den ersten Bereich herum, d.h. der zweite Bereich liegt zwischen dem ersten Bereich und dem Rand der Pressfläche und macht dabei den Rest der Pressfläche aus.

Vorteil dieser Anordnung ist eine besonders effiziente Verhinderung des Anhaftens von Pulvermaterial am Formwerkzeug, bei einer gleichzeitig einfachen Herstellbarkeit der Antihafttextur. Insbesondere ist die Antihafttextur damit einfach lasergravierbar, ohne dabei zu grosse Lasereinfallswinkel zu benötigen, die wiederum die Antihaft-Eigenschaften der Vertiefungsstrukturen negativ beeinflussen könnten. Auch kann es bei einer Lasergravur bei dieser Anordnung nicht zu geometrischen Schwierigkeiten kommen, bei denen ein Teil des Formwerkzeugs Teile der Pressfläche gegen den Laser abschattet bzw. abschirmt. Die Anordnung erlaubt somit kalottenförmige Pressflächen mit einem steilen Rand, die effektiv ein Anhaften von Pulvermaterial verhindern und trotzdem einfach herstellbar sind. Damit wird ein Formwerkzeug geschaffen, dass besonders gut zum Verpressen von Pulvermaterial zu runden oder annähernd runden Formkörpern geeignet ist.

In einer bevorzugten Ausführung aller oben genannten Varianten der Erfindung haben die lokalen Vertiefungsstrukturen gemittelt einen nächsten Abstand von 0.01 mm bis 0.04 mm zueinander.

Mit dem nächsten Abstand ist damit der Abstand, z. B. gemäss der eingangs gegebenen Definition, jeder Vertiefungsstruktur zu der zu ihr am nächsten liegenden Vertiefungsstruktur gemeint. Der gemittelte nächste Abstand ist damit der, über alle Vertiefungsstrukturen der Vielzahl gemittelte nächste Abstand.

Eine solche Anordnung der Vertiefungsstrukturen lässt sich also auch durch Gruppierungen der Antihafttextur in Makrobereiche gemäss der obigen Beschreibung einfach umsetzen.

Diese Anordnung hat in Versuchen eine besonders effektive Verhinderung des Anhaftens von Pulvermaterial ergeben. Gleichzeitig ist die Antihaftstruktur gemäss dieser Anordnung einfach lasergravierbar und damit einfach in der Erzeugung.

Alternativ können die Vertiefungsstrukturen auch eine andere Anordnung auf der Pressfläche haben.

In einer bevorzugten Ausführungsform der Erfindung besteht das Formwerkzeug im Wesentlichen aus Schnellarbeitsstahl, insbesondere aus einer Legierung, die der Sorte HS6-5-2-5 entspricht.

Schnellarbeitsstahl, insbesondere eine Legierung, die der Sorte HS6-5-2-5 entspricht, ist durch seine Stabilität, Härte, Hitze- und Verschleissbeständigkeit besonders gut als Material für das erfinderische Formwerkzeug geeignet. Dabei besteht auch insbesondere die Pressfläche aus diesem Material. Sie ist hohen Kräften ausgesetzt und muss dabei viele Einsätze überstehen, ohne dass sich die Antihafttextur dabei in ihrer Ausformung verändert, wodurch diese ihre Antihaft-Eigenschaft verlieren könnte.

Schnellarbeitsstahl kann dabei einfach lasergraviert werden, wobei er bei der Lasergravur keinen Schaden nimmt (z. B. durch Bildung von Rissen) und ist damit eine besonders geeignete Basis für die Erzeugung der Antihafttextur.

Alternativ kann das Formwerkzeug aus einem anderen Material bestehen, z. B. einem anderen gehärteten Stahl, insbesondere Edelstahl, Aluminium, Keramik, Kunststoff, insbesondere faserverstärktem Kunststoff, oder Holz. Insbesondere kann auch die Pressfläche aus einem anderen Material als der Körper des Formwerkzeugs bestehen und z. B. eine Beschichtung sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen Querschnitt eines ersten erfindungsgemässen Formwerkzeugs;
- Fig. 2a: eine vergrösserte Darstellung der Pressfläche des ersten Formwerkzeugs;
- Fig. 2b: eine direkte Draufsicht auf die Pressfläche des ersten Formwerkzeugs;
- Fig. 3: eine schematische Darstellung der Struktur der Antihafttextur;
- Fig. 4: einen schematischen Querschnitt einer Vertiefungsstruktur; und
- Fig. 5a-f: verschiedene weitere erfindungsgemässe Formwerkzeuge als direkte Draufsicht auf deren jeweilige Pressfläche, wobei diese verschiedene Strukturierungen der Antihafttextur aufweisen.

Grundsätzlich sind in den Figuren gleiche Teile mit gleichen Bezugszeichen versehen.

### Wege zur Ausführung der Erfindung

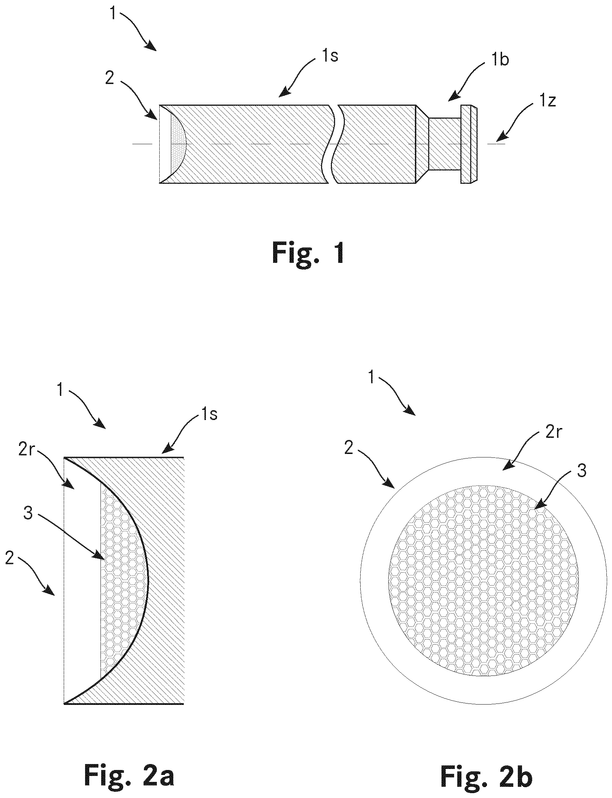

Fig. 1 bis Fig. 4 zeigen schematisch ein erfindungsgemässes Formwerkzeug 1 zur Verwendung in Pressvorgängen zur Verpressung von I<affeepulver bzw. verschiedene Teilbereiche des Formwerkzeugs 1.

Fig. 1 zeigt das erfindungsgemässe Formwerkzeug 1 als Querschnitt in einer Ebene, die eine Symmetrieachse 1z des zylindersymmetrischen Formwerkzeugs 1 enthält. Das Formwerkzeug 1 besteht dabei im Wesentlichen aus einem zylindrischen Körper, dem Schaft 1s, der in etwa um einen Faktor sechs länger (horizontal in der Bildebene von Fig. 1) als breit (vertikal in der Bildebene von Fig. 1) ist. Das Formwerkzeug 1 ist dabei massiv und aus gehärtetem Schnellarbeitsstahl der Sorte HS6-5-2-5 gefertigt. Zur einfacheren Darstellung wird das Formwerkzeug 1 in Fig. 1 verkürzt dargestellt, wobei das Formwerkzeug 1, bzw. dessen Schaft 1s, zwischen den geschwungenen Unterbrechungslinien zylindrisch mit unverändert konstantem Durchmesser beschaffen ist.

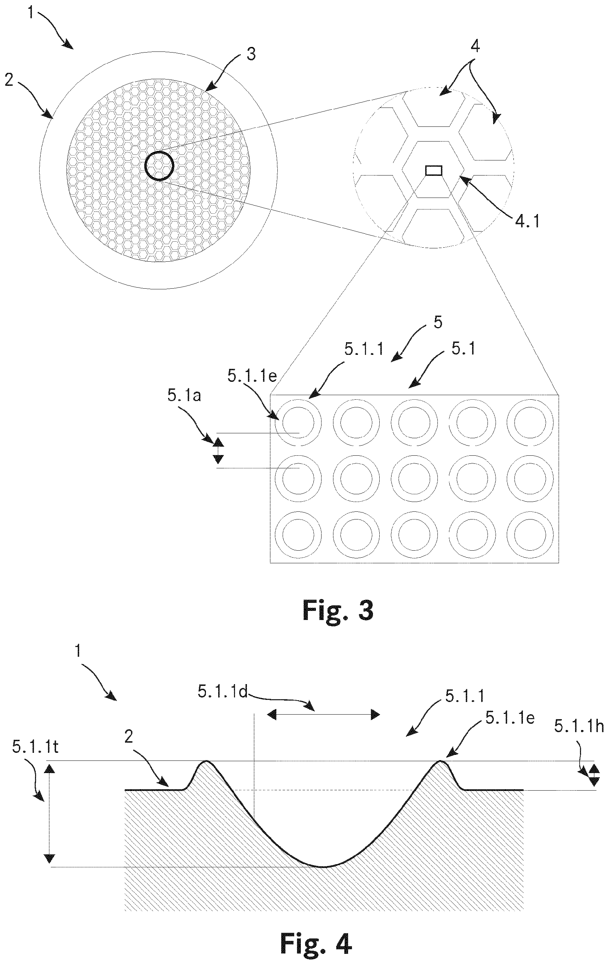

An einem Ende des Schafts 1s befindet sich ein Befestigungsbereich 1b mit einem geringeren Durchmesser als der Schaft 1s, wodurch das Formwerkzeug 1 z. B. mit einer axialen Antriebskomponente (nicht gezeigt) zusammenwirken kann. An dem anderen Ende des Schafts 1s befindet sich eine kalottenförmige Pressfläche 2, welche durch eine Einbuchtung am Schaftende gebildet wird. Die Pressfläche 2 ist ebenfalls (abgesehen von der Antihafttextur 3, siehe Fig. 3 und Fig. 4) symmetrisch zur Symmetrieachse 1z des Formwerkzeugs 1. Ihr tiefster Punkt, bezogen auf den Schaft 1s, liegt damit auf der Symmetrieachse 1z und ihre Tiefe nimmt gleichförmig in alle Richtungen hin ab. Die Pressfläche 2 ist dabei vorgesehen um bei Pressvorgängen mit dem zu verpressenden I<affeepulver in Kontakt zu geraten.

Zwei identisch aufgebaute Formwerkzeuge 1 können beispielsweise mit einem stationären Teil, dessen Innengeometrie einer I<ugelschicht entspricht, zusammenwirken, um gemeinsam kugelförmige Presskörper herzustellen.

Der Bereich der Pressfläche 2 ist in Fig. 2a in derselben Ansicht wie in Fig. 1 noch einmal vergrössert dargestellt. Die Pressfläche 2 erstreckt sich über die gesamte Breite des Formwerkzeugs 1 und bildet damit das gesamte Schaftende des Schafts 1s. Die Pressfläche 2 ist durchgehend konkav mit einer veränderlichen Krümmung, wobei die Krümmungsradien im Bereich von in etwa 45 96 bis 55 % der Breite des Formwerkzeugs liegen. Damit bildet die Pressfläche 2 an der Schnittebene des Querschnitts eine Bogenform, die sich über die gesamte Breite des Formwerkeugs 1 erstreckt. Der Krümmungsradius der Wölbung der Pressfläche 2 ist im Randbereich in etwa um 20 % grösser als im zentralen Bereich der Pressfläche 2. Die Bereiche der Pressfläche 2, die hinter der Schnittebene des Querschnitts liegen, sind in Fig. 2a ebenfalls schematisch eingezeichnet.

Fig. 2b zeigt das Formwerkzeug 1 als direkte Draufsicht auf die Pressfläche 2. Die Pressfläche 2 unterteilt sich in zwei Teilbereiche, den glatten Bereich 2r im Randbereich und die Antihafttextur 3 im zentralen Bereich der Pressfläche 2. Beide Bereiche sind dabei rotationssymmetrisch zur Symmetrieachse 1z des Formwerkzeugs 1 (Fig. 1). Dabei macht die Antihafttextur 3 in etwa 35 96 der Gesamtfläche der Pressfläche 2 aus (in der direkten Draufsicht erscheint dieser Anteil grösser), während der glatte Bereich 2r den restlichen Teil der Gesamtfläche der Pressfläche 2 ausmacht. Im glatten Bereich 2r entspricht die Pressfläche 2 einer polierten Metalloberfläche des Materials des Formkörpers (Schnellarbeitsstahl der Sorte HS6-5-2-5) ohne weitere Textur.

Fig. 3 zeigt schematisch den Aufbau der Antihafttextur 3 der Pressfläche 2 des Formwerkzeugs 1, wobei im oberen linken Bereich das Formwerkzeug 1, bzw. die Pressfläche 3 analog zu Fig. 2b dargestellt wird. In einer ersten, durch zwei verbundene Ringe angezeigten, Vergrösserung wird die Strukturierung der Antihafttextur 3 verdeutlicht. Die Antihafttextur 3 wird durch eine Vielzahl 4 von Makrobereichen gebildet. Die Makrobereiche der Vielzahl 4 haben (ausser am runden äusseren Rand der Antihafttextur 3, wo sie abgeschnitten werden) die Form von gleichmässigen Sechsecken und sind zueinander in einem Sechseck-Wabenmuster angeordnet. Die Makrobereiche der Vielzahl 4 sind, ausgenommen vom Randbereich und von der durch die Wölbung der Pressfläche hervorgerufenen Verformung, gleichförmig und gleichartig aufgebaut. Alle Makrobereiche (bis auf die abgeschnittenen Bereiche am Rand) haben jeweils eine Fläche von in etwa 1 mm² und setzen sich jeweils aus einer Teilmenge (z. B. Teilmenge 5.1 in Fig. 3) einer Vielzahl 5 von Vertiefungsstrukturen mit jeweils angrenzenden Erhöhungsstrukturen zusammen. Zwischen verschiedenen Makrobereichen liegen Bereiche, auf denen sich keine erfindungsgemässen Vertiefungsstrukturen befinden. In diesen Bereichen entspricht die Pressfläche 2 weitestgehend dem glatten Bereich 2r ausserhalb der Antihafttextur.

Eine weitere schematisch eingezeichnete Vergrösserung durch zwei verbundene Rechtecke in Fig. 3 zeigt beispielhaft die Zusammensetzung des Makrobereichs 4.1 (und damit aller Makrobereiche der Vielzahl 4) durch eine Teilmenge 5.1 von der Vielzahl 5 von Vertiefungsstrukturen mit jeweils angrenzenden Erhöhungsstrukturen. Beispielsweise wird die Vertiefungsstruktur 5.1.1 durch die angrenzende Erhöhungsstruktur 5.1.1e umgeben (siehe Fig. 4 und Beschreibung weiter unten). Die Vertiefungsstrukturen der Teilmenge 5.1 sind dabei innerhalb des Makrobereichs 4.1 zueinander regelmässig gitterartig angeordnet und bedecken die gesamte Fläche des Makrobereichs 4.1 auf der Pressfläche 2. Alle Abstände zweier nächster benachbarter Vertiefungsstrukturen zueinander innerhalb der Vielzahl 4 der Makrobereiche, und so auch Abstand 5.1a innerhalb des Makrobereichs 4.1, betragen 0.02 mm. Der Abstand 5.1a entspricht dabei der kürzesten Strecke entlang der Pressfläche 3 von der halben Tiefe einer Vertiefungsstruktur (hier Vertiefungsstruktur 5.1.1) zu einer nächsten benachbarten Vertiefungsstruktur.

Die Vielzahl 5 von Vertiefungsstrukturen der Antihafttextur 3 ist lasergraviert. Die Vertiefungsstrukturen werden in einem Verfahren der Lasergravur erzeugt, bei dem die zu gravierende Oberfläche mit Laserpulsen eines Ytterbium-Faserlasers in einem Lasereinfallswinkel von weniger als 20° bestrahlt wird. Hierbei beträgt der Fokusdurchmesser des Ytterbium-Faserlasers, mit dem die Vertiefungsstrukturen lasergraviert sind, 0.05 mm und dessen Fokustiefe in etwa 1 mm. Jede Vertiefungsstruktur der Vielzahl 5 ist mit jeweils 30 Einzelabtragungen von 0.0004 mm lasergraviert. Die flächige Ausdehnung jeder Vertiefungsstruktur der Vielzahl 5 liegt im Bereich von 0.0003 mm² bis 0.008 mm². Die Erhöhungsstrukturen weisen eine Höhe von 0.01 mm bis 0.14 mm auf.

Fig. 4 zeigt beispielhaft die Vertiefungsstruktur 5.1.1 auf der Pressfläche 2 des Formwerkzeugs 1 als schematischen Querschnitt, wobei die Schnittebene die lokale Flächennormale der Pressfläche 2 am Ort des tiefsten Punktes der Vertiefungsstruktur 5.1.1 enthält. Die Vertiefungsstrukturen der Vielzahl 5 sind dabei nicht exakt gleichförmig und die restlichen Vertiefungsstrukturen weichen im Detail von der gezeigten Form ab.

Die Vertiefungsstruktur 5.1.1 ist eine zur lokalen Flächennormalen der Pressfläche 2 rotationssymmetrische Einbuchtung auf der Pressfläche 2 mit einer Tiefe 5.1.1t von 0.012 mm. Die Vertiefung in der Oberfläche der Pressfläche ist dabei durch Materialabtrag durch die eingebrachten Laserpulse entstanden.

Die Vertiefungsstruktur 5.1.1 weist auf ihrer halben Tiefe 5.1.1t eine maximale flächige Ausdehnung von 0.002 mm² auf und hat auf ihrer halben Tiefe 5.1.1t einen Durchmesser 5.1.1d von 0.05 mm.

Der obere Rand der Vertiefungsstruktur 5.1.1 bildet dabei auch den oberen Rand einer Erhöhungsstruktur 5.1.1e, welche die Vertiefungsstruktur 5.1.1 ringförmig umgibt. Die Erhöhungsstruktur 5.1.1e hat dabei eine Höhe 5.1h von 0.003 mm. Die Erhöhungsstruktur 5.1.1e wird durch eine teilweise Materialablagerung des bei der Lasergravur der Vertiefungsstruktur 5.1.1 abgetragenen Materials gebildet.

Die so beschaffene Antihafttextur 3 des Formwerkzeugs 1 verhindert effektiv das Anhaften von I<affeepulver verschiedener Kaffeesorten auf der Pressfläche 2 des Formwerkzeugs 1, auch bei Pressvorgängen, die vergleichsweise hohe Drücke beinhalten.

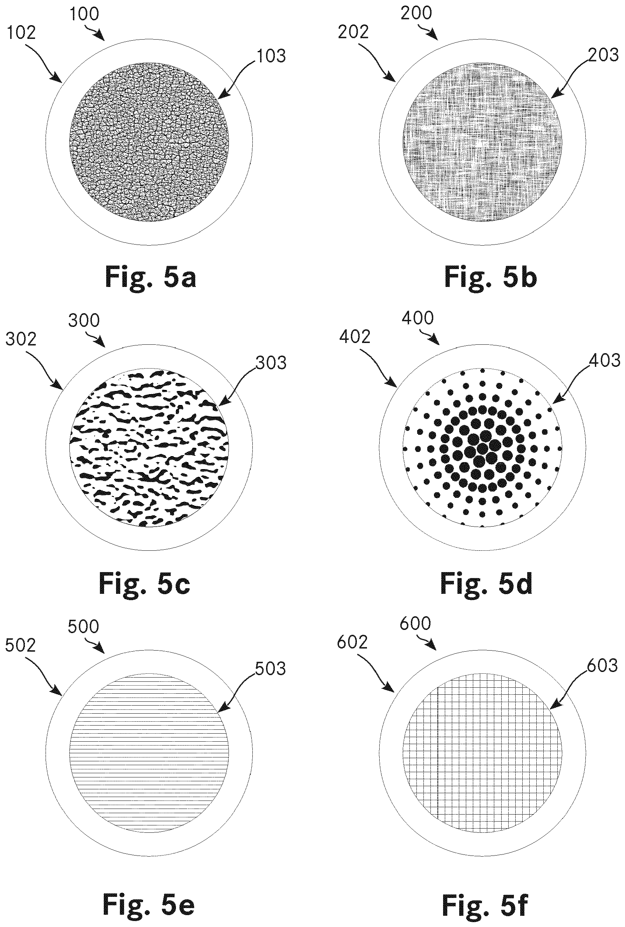

Fig. 5a bis Fig. 5f zeigen verschiedene alternative Ausführungsformen des erfinderischen Formwerkzeugs 100, ..., 600 zur Verpressung von I<affeepulver, die sich durch die Strukturierung der jeweiligen Antihafttextur 103, ..., 603 unterscheiden. Dabei zeigen Fig. 5a bis Fig. 5f das jeweilige Formwerkzeug 100, ..., 600 in einer direkten Draufsicht auf dessen Pressfläche 102, ..., 602, analog zu Fig. 2b. Die Beschaffenheit der Formwerkzeuge 100, ..., 600 aus Fig. 5a bis Fig. 5f entspricht der Beschaffenheit (bis auf die jeweilige Antihafttextur 103, ..., 603) des Formwerkzeugs 1 aus den Fig. 1 bis Fig. 4. Die Antihafttexturen 103, ..., 603 der Ausführungen in Fig. 5a bis Fig. 5f entsprechen in ihrer Ausdehnung der Antihafttextur 3 des Formwerkzeugs 1 aus den Fig. 1 bis Fig. 4 und bestehen aus einer Vielzahl von Vertiefungsstrukturen, die (bis auf die Anzahl an Vertiefungsstrukturen) der Vielzahl 5 von Vertiefungsstrukturen des Formwerkzeugs 1 entspricht. Die in Fig. 5a bis Fig. 5f gezeigten schwarzen Bereiche der jeweiligen Antihafttextur 103, ..., 603 entsprechen dabei aus Vertiefungsstrukturen zusammengesetzten Makrobereichen, innerhalb derer die jeweils nächsten Abstände zwischen zwei Vertiefungsstrukturen 0.02 mm betragen. Die gezeigten weissen Bereiche der Antihafttexturen 103, ..., 603 entsprechen wiederum Bereichen der jeweiligen Pressfläche 102, ...602, innerhalb derer sich keine erfinderischen Vertiefungsstrukturen befinden. Auch die Antihafttexturen 103, ..., 603 verhindern effektiv ein Anhaften von I<affeepulver bei Pressvorgängen.

Fig. 5a zeigt ein Formwerkzeug 100 mit einer Pressfläche 102, auf der sich eine Antihafttextur 103 befindet. Dabei ist die Vielzahl an Vertiefungsstrukturen der Antihafttextur 103 so auf der Pressfläche 102 verteilt, dass die Antihafttextur das Erscheinungsbild einer (fein strukturierten) Lederoberfläche imitiert.

Fig. 5b zeigt ein Formwerkzeug 200 mit einer Pressfläche 202, auf der sich eine Antihafttextur 203 befindet. Hier ist die Vielzahl an Vertiefungsstrukturen der Antihafttextur 203 so auf der Pressfläche 202 verteilt, dass die Antihafttextur 203 das Erscheinungsbild einer (fein strukturierten) Gewebeoberfläche, z. B. Leinen, imitiert.

Fig. 5c zeigt ein Formwerkzeug 300 mit einer Pressfläche 302, auf der sich eine Antihafttextur 303 befindet. Dabei ist die Vielzahl an Vertiefungsstrukturen der Antihafttextur 303 auf der Pressfläche 302 so verteilt, dass die Antihafttextur ein Wellenmuster auf der Pressfläche 302 abbildet. Die wellenförmigen Makrobereiche haben dabei eine Fläche von 0.1 bis 2 mm²

Fig. 5d zeigt ein Formwerkzeug 400 mit einer Pressfläche 402, auf der sich eine Antihafttextur 403 befindet. Dabei ist die Vielzahl an Vertiefungsstrukturen der Antihafttextur 403 so auf der Pressfläche 402 gemäss einem Punktemuster verteilt, bei dem sich grössere Punkte (mit einer Fläche von in etwa 10 mm²) nahe des Zentrums der Pressfläche 402 befinden und der Durchmesser der Punkte zum Rand der Antihafttextur 403 hin abnimmt.

Fig. 5e zeigt ein Formwerkzeug 500 mit einer Pressfläche 502, auf der sich eine Antihafttextur 503 befindet. Dabei ist die Vielzahl an Vertiefungsstrukturen der Antihafttextur 503 in gleichmässig zueinander beabstandeten parallelen Linien angeordnet, die die Antihafttextur 503 vollständig durchziehen. Jede Linie umfasst dabei auch in ihrer Breite (von ca. 0.1 mm) mehrere nebeneinander befindliche Vertiefungsstrukturen. Die Distanz der einzelnen Linien beträgt dabei 0.5 mm.

Fig. 5f zeigt ein Formwerkzeug 600 mit einer Pressfläche 602, auf der sich eine Antihafttextur 603 befindet. Dabei ist die Vielzahl an Vertiefungsstrukturen der Antihafttextur 603 in gleichmässig zueinander beabstandeten Gitterlinien angeordnet, die ein regelmässiges und gleichmässiges Gittermuster bilden. Zwei parallele benachbarte

Gitterlinien haben in Etwa einen Abstand von 1 mm zueinander. Innerhalb jeder Gitterlinie befinden sich auch über die Breite der Gitterlinie (ca. 0.1 mm) mehrere benachbarte Vertiefungsstrukturen.

Die Erfindung ist nicht auf die oben aufgeführten Ausführungsbeispiele beschränkt. So kann das Formwerkzeug eine andere Form haben, beispielsweise mit einem längeren oder kürzeren Schaft, oder einem Schaft mit weiteren Bereichen, in denen dessen Durchmesser abweicht. Auch kann das Formwerkzeug eine komplexere Geometrie haben, beispielsweise für Fälle in denen nicht vorgesehen ist, das Formwerkzeug zu bewegen und es z. B. mit einem bewegten Pressstössel zusammenwirkt. Ausserdem kann das Formwerkzeug aus einem anderen Material bestehen, beispielsweise Edelstahl der Sorte 904L. Ausserdem kann die Pressfläche aus einem anderen Material als der Rest des Formwerkzeugs bestehen, z. B. durch eine Beschichtung.

Die Pressfläche muss nicht rotationsymmetrisch sein, sondern kann ein ovales oder ein quadratisches Profil aufweisen. Die Pressfläche kann ausserdem eine komplexere Form haben, die Designs oder Schriftzüge in einen Formkörper einpresst. Auch das Formwerkzeug als Ganzes muss nicht notwendigerweise rotationsymmetrisch sein. Die Ausdehnung der Antihafttextur kann geringer oder grösser als in den gezeigten Ausführungsbeispielen ausfallen und ihr Rand kann eine andere als eine runde Form haben. So kann die Antihafttextur beispielsweise auch rechteckig oder sternförmig sein. Die Vertiefungsstrukturen können auch nicht lasergraviert, sondern z. B. eingepresst sein, oder mit einem anderen Typen von Laser lasergraviert sein. Auch können die Vertiefungsstrukturen mit mehr oder weniger Einzelabtragungen lasergraviert sein. Der nächste Abstand der Vertiefungsstrukturen zueinander kann grösser oder geringer ausfallen. Die Vertiefungsstrukturen können auch eine andere Tiefe als 0.012 mm aufweisen oder eine andere maximale Ausdehnung haben. Ausserdem kann die Antihafttextur, insbesondere bei nicht lasergravierten Vertiefungsstrukturen, auch keine Erhöhungen aufweisen oder Erhöhungen aufweisen, die nicht um die Vertiefungsstrukturen herum angeordnet sind. Weiter ist die gezeigte Form der Vertiefungsstruktur rein beispielhaft und kann (auch innerhalb eines Formkörpers) von dem Beispiel abweichen.

Die gezeigten Strukturierungen der Antihafttextur, z. B. als sechseckige Makrobereiche, ist nur eine Ausführungsform. Es sind unzählige weitere Muster oder Strukturierungen denkbar, beispielsweise gleichförmig gepunktete Muster, eine gleichmässige Ausfüllung der gesamten Antihafttextur mit Vertiefungsstrukturen, eine zufällige Anordnung der Vertiefungsstrukturen (z. B. gemäss einer Monte-Carlo Methode), eine I<achelung mit quadratischen oder rechteckigen Makrobereichen, eine Holzoptik-Imitation und viele mehr. Auch kann das Formwerkzeug für andere Pulvermaterialien als I<affeepulver ausgelegt sein oder auch in der gezeigten Form für andere Pulvermaterialien als I<affeepulver verwendet werden.

Zusammenfassend ist festzustellen, dass durch eine flächige Antihafttextur mit einer Vielzahl von lokalen Vertiefungsstrukturen, wobei die Vertiefungsstrukturen jeweils eine Tiefe von 0.04 mm bis 0.2 mm, insbesondere eine Tiefe von 0.08 mm bis 0.14 mm, aufweisen, ein Formwerkzeug geschaffen wird, dass ein Anhaften von Pulvermaterial bei Pressvorgängen effektiv verhindert.

## Patentansprüche

1. Formwerkzeug zur Verwendung in Pressvorgängen zur Verpressung von Pulvermaterial, insbesondere I<affeepulver, umfassend;
- eine konkave, insbesondere kalottenförmige, Pressfläche,
**dadurch gekennzeichnet, dass** sich auf der Pressfläche eine flächige Antihafttextur zur Verhinderung eines Anhaftens von Pulvermaterial, insbesondere I<affeepulver, befindet, wobei die Antihafttextur eine Vielzahl von lokalen Vertiefungsstrukturen umfasst und wobei die Vertiefungsstrukturen jeweils eine Tiefe von 0.04 mm bis 0.2 mm, insbesondere eine Tiefe von 0.08 mm bis 0.14 mm, aufweisen.

2. Formwerkzeug nach Anspruch 1, wobei die lokalen Vertiefungsstrukturen lasergraviert sind.

3. Formwerkzeug nach Anspruch 2, **dadurch gekennzeichnet, dass** die lasergravierten Vertiefungsstrukturen mit einem Lasereinfallswinkel von höchstens 40°, insbesondere höchstens 20°, lasergraviert sind.

4. Formwerkzeug nach Anspruch 2 oder 3, **dadurch gekennzeichnet, dass** die Vertiefungsstrukturen jeweils durch mehrere Einzelabtragungen lasergraviert sind, wobei eine Einzelabtragung jeweils eine lokale Vertiefung mit einer Tiefe von 0.0002 mm bis 0.0006 mm erzeugt.

5. Formwerkzeug nach Anspruch 4, **dadurch gekennzeichnet, dass** die Vertiefungsstrukturen jeweils durch wenigstens 10 und höchstens 50 Einzelabtragungen, insbesondere wenigstens 20 und höchstens 40 Einzelabtragungen, lasergraviert sind.

6. Formwerkzeug nach einem der Ansprüche 2 bis 5, **dadurch gekennzeichnet, dass** die Vertiefungsstrukturen durch einen Laser mit einem Fokusdurchmesser von 0.005 mm bis 0.2 mm, insbesondere 0.02 mm bis 0.1 mm, lasergraviert sind.

7. Formwerkzeug nach einem der Ansprüche 2 bis 6, **dadurch gekennzeichnet, dass** die Vertiefungsstrukturen durch einen Ytterbium-Faserlaser lasergraviert sind.

8. Formwerkzeug nach einem der Ansprüche 1 bis 7, **dadurch gekennzeichnet, dass** die Antihafttextur lokale Erhöhungsstrukturen umfasst, wobei die Erhöhungsstrukturen an die lokalen Vertiefungsstrukturen angrenzen, und wobei die Erhöhungsstrukturen eine Höhe von 0.01 mm bis 0.14 mm aufweisen.

9. Formwerkzeug nach einem der Ansprüche 1 bis 8, **dadurch gekennzeichnet, dass** die lokalen Vertiefungsstrukturen jeweils auf ihrer halben Tiefe eine maximale flächige Ausdehnung von 0.00002 mm² bis 0.03 mm², insbesondere 0.0003 mm² bis 0.008 mm², aufweisen.

10. Formwerkzeug nach einem der Ansprüche 1 bis 9, **dadurch gekennzeichnet, dass** die lokalen Vertiefungen sich innerhalb von einer Vielzahl an Makrobereichen mit jeweils einer flächigen Ausdehnung von 0.3 mm² bis 3.0 mm² auf der Pressfläche befinden, wobei die Makrobereiche jeweils durch Grenzbereiche mit geringerer Tiefe als die Tiefe der lokalen Vertiefungsstrukturen voneinander getrennt sind.

11. Formwerkzeug nach Anspruch 10, **dadurch gekennzeichnet, dass** die Makrobereiche der Antihafttextur eine Sechseck-Form haben und in der Anordnung eines Sechseck-Wabenmusters zueinander auf der Pressfläche angeordnet sind.

12. Formwerkzeug nach einem der Ansprüche 1 bis 11, **dadurch gekennzeichnet, dass** die Pressfläche rotationssymmetrisch zu einer Symmetrieachse ist und die Antihaftstruktur mindestens einen Bereich der Pressfläche bedeckt, der zu der Symmetrieachse der Pressfläche einen Normalenwinkel von weniger als 20° einnimmt.

13. Formwerkzeug nach einem der Ansprüche 1 bis 12, **dadurch gekennzeichnet, dass** sich flächig ausserhalb der Antihafttextur auf der Pressfläche ein Bereich befindet, dessen Oberfläche relativ zur Antihafttextur im Wesentlichen glatt ist.

14. Formwerkzeug nach Anspruch 13, **dadurch gekennzeichnet, dass** die Pressfläche kalottenförmig ist und eine Fläche der Antihafttextur einem ersten inneren konzentrischen Bereich der Pressfläche entspricht, wobei ein äusserer glatter zweiter Bereich der Pressfläche um die Antihafttextur herumliegt und wobei der erste Bereich 1096 bis 60%, insbesondere 20% bis 50%, der Pressfläche ausmacht und der zweite Bereich den Rest der Pressfläche ausmacht.

15. Formwerkzeug nach einem der Ansprüche 1 bis 13, **dadurch gekennzeichnet, dass** die lokalen Vertiefungsstrukturen gemittelt einen nächsten Abstand von 0.01 mm bis 0.04 mm zueinander haben.

16. Formwerkzeug nach einem der Ansprüche 1 bis 14, **dadurch gekennzeichnet, dass** es im Wesentlichen aus Schnellarbeitsstahl, insbesondere aus einer Legierung, die der Sorte HS6-5-2-5 entspricht, besteht.
